Europäisches Patentamt

(19) European Patent Office

Office européen des brevets

(11) Publication number: **0 010 985**
A1

# EUROPEAN PATENT APPLICATION

(21) Application number: **79302442.3**

(51) Int. Cl.³: **B 60 P 1/04**, B 62 D 53/06

(22) Date of filing: **05.11.79**

(30) Priority: **03.11.78 GB 4311178**

(43) Date of publication of application: **14.05.80**
**Bulletin 80/10**

(84) Designated Contracting States: **AT BE CH DE FR IT LU NL SE**

(71) Applicant: **TRANSQUIP INTERNATIONAL TRAILERS LIMITED, The Grove Industrial Estate Weldon Road, Corby Northamptonshire (GB)**

(72) Inventor: **England, Peter, 5 Barlows Lane Wilbarston, Market Harborough Leicestershire (GB)**
Inventor: **Boyd, Raymond Matthew, 30 Stavanger Close, Corby Northamptonshire (GB)**

(74) Representative: **Wain, Christopher Paul et al, A.A. THORNTON & CO. Northumberland House 303-306 High Holborn, LONDON WC1V 7LE (GB)**

(54) **Trailers.**

(57) A trailer has a gooseneck connection for attachment to a tractor (3), the connection comprising a neck (1) having its forward end adapted for connection to the fifth wheel (2) of the tractor, and two links (4,5) suspending the forward end of a platform (6) of the trailer from the rear end of the neck (1), each link having a pivotal connection (7, 7A, 11, 14) with both the neck and the platform and the links being spaced apart longitudinally of the connection. The rear link (5) is movable to alter the inclination of the neck (1) relative to the platform (6) and to move the neck (1) from a position in which it is attachable to the tractor (3) to a position in which it is in alignment with the platform (6) to form an extension thereof. To simply achieve the desired movement of the rear link (5) it is formed in two parts (9, 13) pivotally connected one to the other, the pivoted connection (12) between the two parts being movable to alter the distance between the pivotal connection (11) of the upper part (9) of the rear link (5) with the neck (1) and lower part (13) of the rear link (5) with the platform (6) to thereby alter the inclination of the platform.

- 1 -

TRAILERS

This invention relates to trailers having gooseneck connections for attachment to a tractor.

A trailer having a gooseneck connection which is collapsible so that the neck can form an extension of the trailer platform to provide a ramp for loading of the platform is disclosed in U.S. Specification No. 4078684. In that specification, the connection comprises two longitudinally spaced-apart links each of which is pivotally connected at one end to the neck. The other end of the forward link is pivotally connected to the platform and the other end of the rearward link is connected to a piston rod of a ram and is slidable in slots formed in box-sections attached to the platform. The arrangement is such that movement of the lower end of the rearward link alters the geometry of the connection to rest the platform on the ground, permit removal of the tractor and thereafter permit the neck to pivot to the ground forming a ramp for loading the platform.

The known trailer has the disadvantage that a complex box-section arrangement is required to permit the rear link to slide and the sliding motion causes substantial wear of the relatively slidable components.

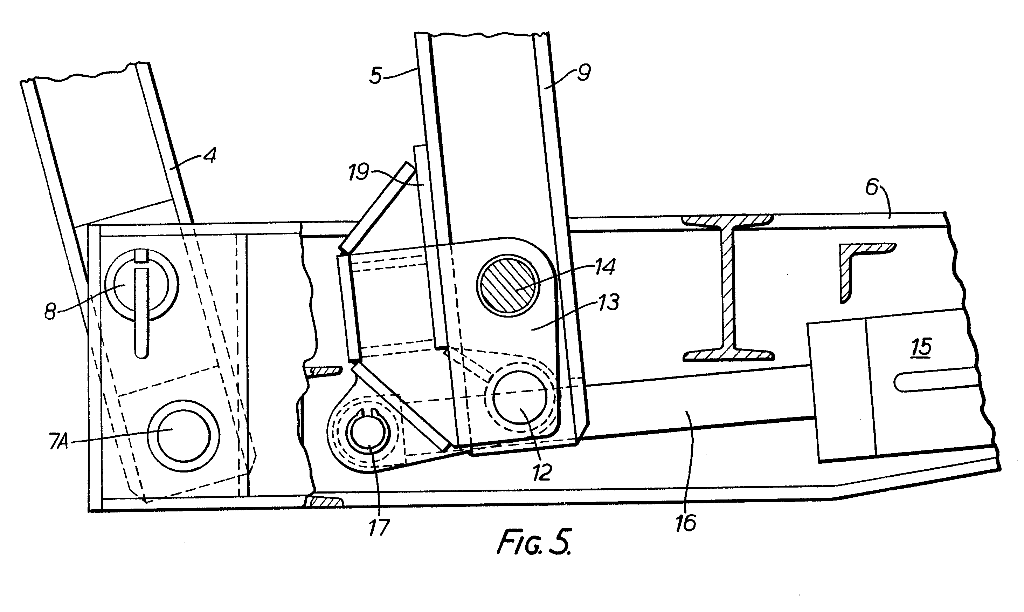

Furthermore, because the rear link is slidable, a large hole, in practice about 30 cms (12ins) by 45cms (18ins) is formed in the platform rearwardly of the rear link to permit the necessary amount of sliding and pivotal movement of the rear link. The hole is of particular significance when loading the trailer, since it prevents the loading of small vehicles unless a further plate or ramp is placed across the holes. Another disadvantage of the known trailer is that in the loading condition, illustrated in Figures 5 and 7 of said Specification, there is a large gap between the forward end of the platform and the rear end of the neck. Again, the gap prevents loading of small vehicles unless an additional plate or ramp is used to cover the gap. The large gap is created because of the geometry of the connection and the sliding movement of the rear link which prevents the rear end of the neck attaining a position close to the forward end of the platform.

In addition to the foregoing disadvantages of the known trailer, we have discovered that when the trailer is used with 6x4 tractor, i.e. a tractor having six wheels of which four are drivable, it is virtually impossible for the trailer to comply with present European regulations which require a swing clearance of the neck of some 244 cms. (96ins). To provide such a swing clearance the extension of the ram must be extremely large to provide sufficient mechanical advantage to lift the trailer onto and from its tractor when the trailer is fully laden. The use of such a large ram would be impractical and would also be very expensive.

The present invention aims to provide a trailer having a gooseneck connection which is relatively simple and cheap to produce and in which the neck can provide a ramp for the platform.

In accordance with the present invention, there is provided a trailer having a gooseneck connection for attachment to a tractor, said connection comprising a neck having its forward end adapted for connection to the tractor, two links suspending the forward end of a platform of the trailer from the rear end of the neck, each link having a pivotal connection with both the neck and the platform and the links being spaced apart longitudinally of the connection, and one of the links being movable to alter the inclination of the neck relative to the platform and to move the neck from a position in which it is attachable to the tractor to a position in which it is in alignment with the platform to form an extension thereof, wherein the rear link is formed in two parts pivotally connected one to the other, the pivoted connection between the two parts being movable to alter the distance between the pivotal connection of the upper part of the rear link with the neck and lower part of the rear link with the platform to thereby alter the inclination of the platform.

The lower part of the rear link preferably includes means engageable with the forward edge of the rear link when said connection between the two parts is in its lower most position, whereby a rearwardly directed force applied to said means rotates said rear link about its connection with the platform. Said means is preferably a transversely extending member.

Preferably, said force is applied by a ram connection to the lower part of the rear link and operable to rotate the lower part.

In a preferred embodiment of the invention, there is provided an arrangement for bracing and locking the links in their desired positions for towing of the trailer. The arrangement preferably comprises a cross-link connected between the lower end of one link and the upper end of the other link.

A trailer in accordance with the invention having a gooseneck connection will now be described, by way of example, with reference to the accompanying drawings in which:-

Figure 1 is an elevational view of the tralier attached to a tractor,

Figure 2 to 4 are views similar of Figure 1 showing the gooseneck connection in different positions,

Figure 5 is an enlarged detail view of part of the gooseneck connection in the position illustrated in Figure 3,

Figure 6 is a view similar to Figure 1 showing a trailer with a modified gooseneck connection,

Figures 7 to 9 are views showing the trailer of Figure 6 in different conditions, and

Figure 10 is a detail view of a locking arrangement for the connection shown in Figures 6 to 9.

The gooseneck connection comprises a neck 1 adapted at its forward end for attachment to the "fifth wheel" 2 of the tractor 3, in known manner.

The parts of the gooseneck connection on one side of the longitudinal axis thereof are arranged as a mirror image of the parts on the other side of said axis and only the parts on one side are illustrated in the drawings and described below.

A pair of links 4,5 suspend the forward end of a platform or deck 6 of the trailer from the rear end of the neck 1.

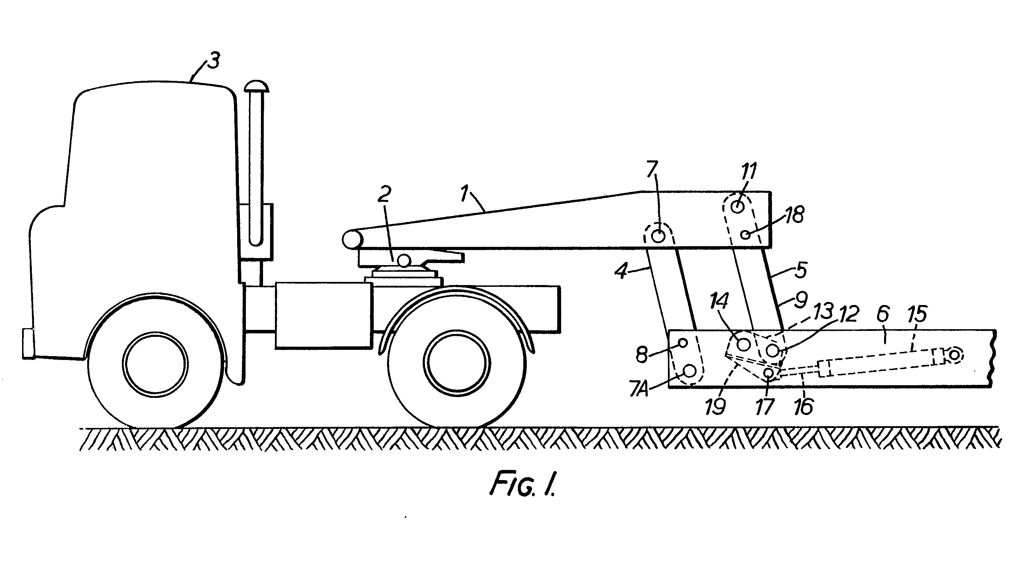

The forward link 4 has pivotal connections 7,7A with the neck 1 and platform 6 respectively. In the travelling condition illustrated in Figure 1, a pin 8 connects the link 4 to the platform to prevent rotation of the link 4 relative to the platform.

The rear link 5 comprises a rectilinear part 9 connected at its upper end by a pivot 11 to the neck 1 and connected at its lower end by a pivot pin 12 to a lower part 13. A pivot pin 14 connects the lower part 13 to the platform 6 and a ram 15 has its piston rod 16 connected to a cross-piece 17 of the lower part.

A locking pin 18 secures the upper end of upper part 9 to the neck 1 to prevent rotation of that part 9 relative to the neck. Alternatively the pin 18 could be replaced by a locking member (not shown) which secures the lower end of the rear link 5 and part 13, through the pivot pin 12, to the platform to prevent rotation between the parts.

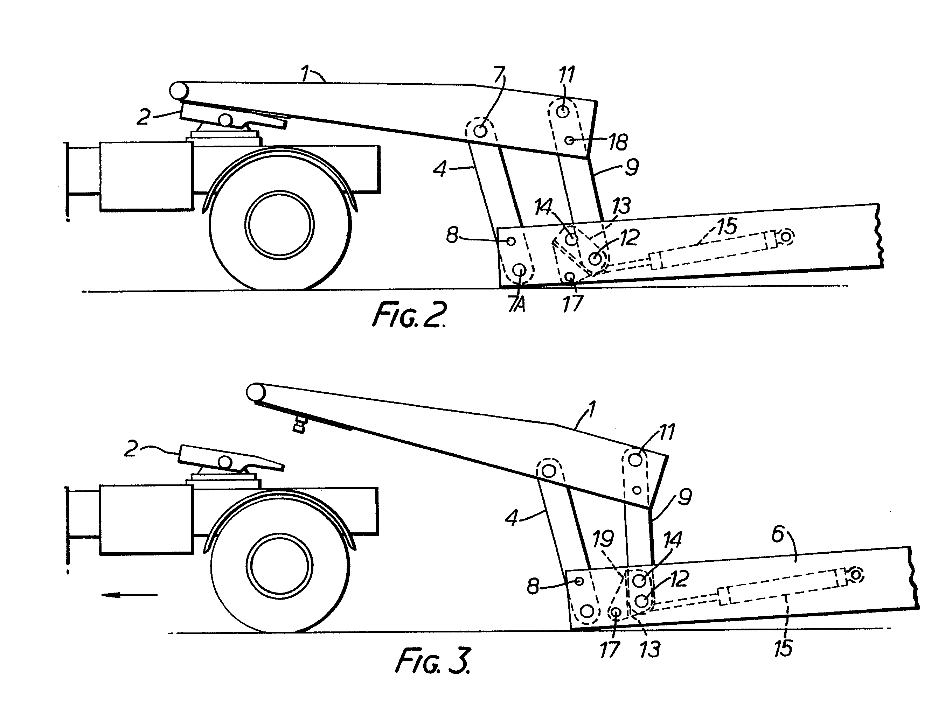

To operate the gooseneck connection, starting from the travelling condition of Figure 1, the rear link locking pins 18 or locking members are removed and the rams 15 are extended to rotate the lower part 13 clockwise about the pin 14. This movement effectively shortens the link 5 and rotates the neck about the pin connection 7 of the forward link 4, the forward edge of the platform dropping to the ground, as seen in Figure 2. While the platform is being lowered, the neck 1 pivots about the tractor fifth wheel 2 and the inclination of the neck increases. The tractor is then removed.

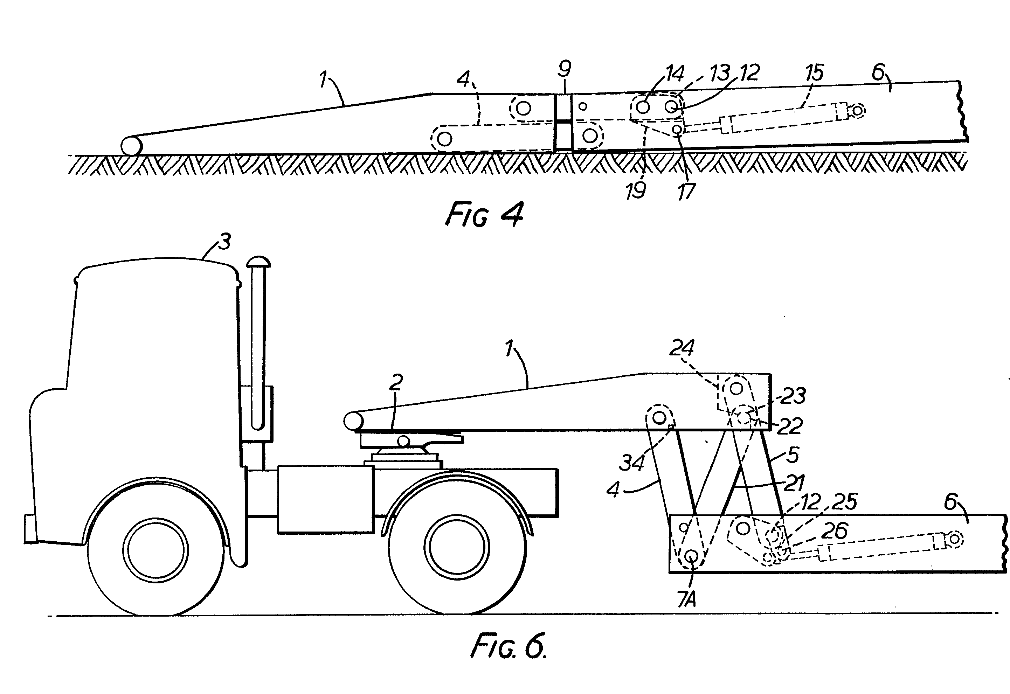

Further extension of the rams 15 rotates the lower part 13 to the position illustrated in Figures 3 and 5 in which a cross plate 19 of the assembly engages the forward edge of the upper rear link part 9. Forward locking pins 8 are then removed and the rams 15 are retracted to apply a force to the cross-plate 19 which causes the links 4,5 to rotate to the position of Figure 4 in which the links are substantially parallel and horizontal. The neck is aligned with and effectively forms an extension of the platform 6 and thus provides a ramp to facilitate loading of the platform.

To lift the neck and re-attach it to the tractor, the above-described operation is reversed.

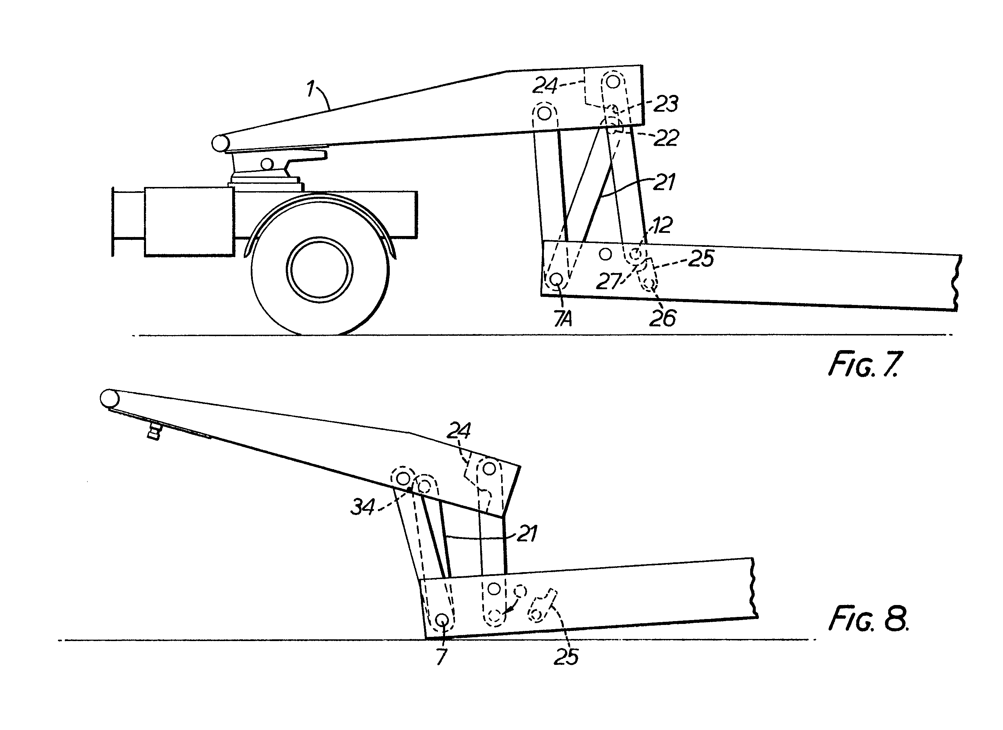

In Figures 6 to 10 there is illustrated a modification of the above described gooseneck connection in which there is an arrangement for bracing and locking the links 4 and 5 in the normal operative condition of the connection, and the same reference numerals have been used to denote corresponding parts. The lower part 13 of the rear link 9 is omitted from Figures 7 to 9 for the sake of clarity.

Referring to Figures 6 and 10, the brace comprises a cross-link 21 which is pivotally connected at its lower end to the platform 6 and the forward link 4 by the pivot pin 7A and which at its upper end has a spigot 22 which, in the condition of Figure 6, engages in a recess 23 formed in a plate 24 fixed at the rear end of the neck 1.

To lock the connection, there is provided a locking member 25 pivotally connected to the platform 6 by a pivot pin 26 and having at one end a recess 27 which, in the condition of Figure 6, provides a seat for the pin 12 connecting the parts 9 and 12 of rear link 5. As best seen in Figure 10, the locking member 25 has an extension 28 at its other end and is biased in a clockwise direction by a tension spring 29 connected between the extension 28 and a frame member 31 of the platform 6. A cam follower 32 is pivotally mounted on the frame member 31 and engages the cross-link 21. Connected between the follower 32 and the extension 28 is a rigid arm 33. The arrangement is such that if the cross-link 21 moves anti-clockwise, as seen in Figure 10, the locking member is moved clockwise by the bias of spring 29 locking member 25 clockwise.

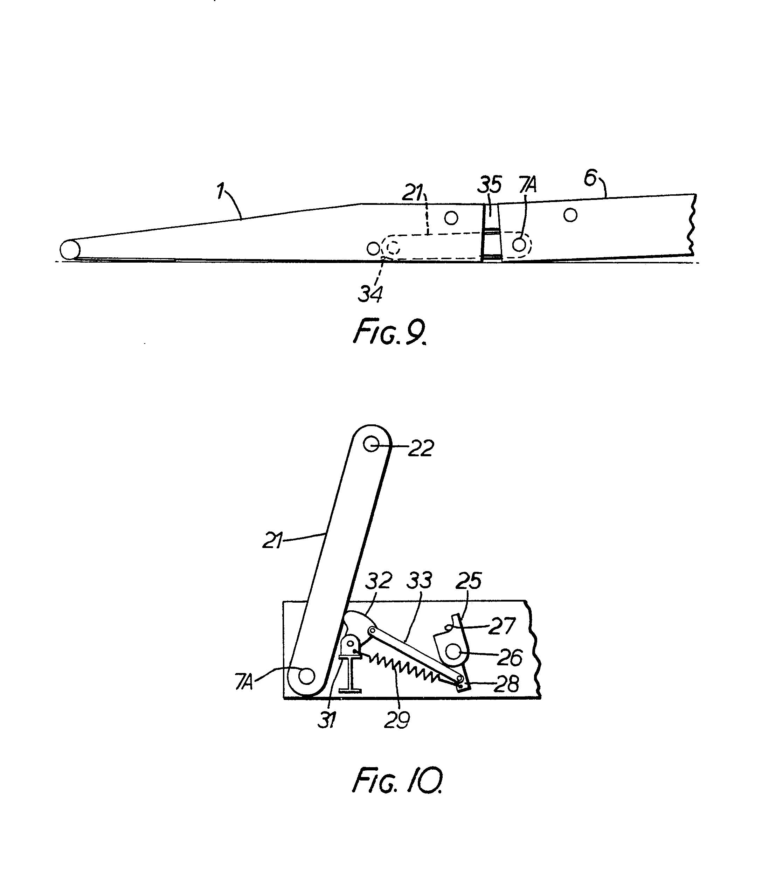

The stages of operation illustrated in Figures 6 to 9 will now be described. In the condition of Figure 6, the neck 1, links 4,5 and the platform 6 are rigidly locked together by the cross-link 21 so that there is no possibility of relative movement between the neck and the platform, even when the trailer runs over bumpy or uneven ground. To release the locking member, the ram is retracted to rotate the lower part 13 of the rear link 5 and effectively lengthen the rear link 5. The spigot 22 thus moves out of its recess 23 and the pin 12 moves out of the recess 27 of the locking member 25, to the condition shown in Figure 7. The cross-link 21 is manually rotated anti-clockwise until it engages stop 34 and under the action of spring 29, the locking member 25 is rotated clockwise. In this condition there is no bracing and the gooseneck connection acts as described with reference to Figures 1 to 5. Thus, the ram is extended to shorten rear link 5, to the condition of Figure 8, which corresponds to Figure 3, in which the tractor is released, and further extension of the ram brings the neck 1 into alignment with the platform 6, as shown in Figure 9 which corresponds to Figure 4.

To lift the neck, the above-described procedure is reversed until the condition of Figure 8 is attained and the tractor attached. The ram is then further retracted and platform 6 lifts. The cross link 21 is then manually rotated clockwise until it moves overcentre and adopts the position illustrated in Figure 7. During this movement the follower 32 and arm 33 move the locking member 25 clockwise to the position of Figure 7. Slight extension of the ram reduces the length of rear link 5 and the spigot 22 and pin 12 seat in their respective recesses 23 and 27, as shown in Figure 6. In this braced and locked condition the tractor and trailer are ready for travel.

It will be appreciated that only one of each of the links 4,5 need be provided and located centrally of the neck 1 and platform 6, but preferably two such links are provided, one on each side of the neck and platform, preferably with one such associated bracing arm 21 and two locking members 25.

The above-described trailer has the advantages that in the loading condition the gap 35 between the rear end of the neck 1 and the forward end of the platform 6 can be small, of the order of about 4cm, to enable loading of small-wheeled vehicles on the trailer without the use of additional ramps or plates. Furthermore, the geometry of the connection is such that movement of the rear link 5 does not require a large hole to be formed in the platform 6 rearwardly of the link, as is required in the known trailer. Additionally, the above-described trailer can be made to conform to European regulations regarding swing clearance, even for 6x4 tractors carrying heavy loads.

CLAIMS

1.      A trailer having a gooseneck connection
for attachment  to a tractor, said connection comprising
a neck having its forward end adapted for connection to
the tractor, two links suspending the forward end of a
platform of the trailer from the rear end of the neck,
each link having a pivotal connection with both the neck
and the platform and the links being spaced apart
longitudinally of the connection, and one of the links
being movable to alter the inclination of the neck
relative to the platform and to move the neck from a
position in which it is attachable to the tractor to a
position in which it is in alignment with the platform
to form an extension thereof, wherein the rear link is
formed in two parts pivotally connected one to the other,
the pivoted connection between the two parts being
movable to alter the distance between the pivotal
connection of the upper part of the rear link with the
neck and lower part of the rear link with the platform
to thereby alter the inclination of the platform.

2.      A trailer according to claim 1, wherein the
lower part of the rear link includes means engageable
with the forward edge of the rear link when said connection
between the two parts is in its lowermost position.

3.      A trailer according to claim 2, including force-
applying means for applying a force to the lower part, said
means being pivotally connected to the lower part.

4.      A trailer according to claim 3, wherein said
force-applying means is a ram.

5.      A trailer according to claim 2 or 3, wherein the connections between the link parts, between the lower part and the platform and between the lower part and the force applying means are respectively on the apices of a triangle.

6.      A trailer according to any of claims 1 to 5, including locking pins for securing the front link to the platform and the rear link to the neck.

7.      A trailer according to any of claim 1 to 6, including bracing and locking means for bracing the links, the neck and the platform in a desired position.

8.      A trailer according to claim 7, wherein the bracing means comprises a cross link extending between the front and rear links.

0010985

FIG.I.

FIG. 2.

FIG. 3.

FIG 4

FIG. 6.

FIG. 5.

Fig. 7.

Fig. 8.

0010985

FIG. 9.

FIG. 10.

0010985

Application number

### European Patent Office

## EUROPEAN SEARCH REPORT

EP 79 302 442.3

| DOCUMENTS CONSIDERED TO·BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | US - A - 3 756 443 (VERSCHAGE et al.) <br> * complete document * <br> -- | 1,3,4 | B 60 P  1/04 <br> B 62 D 53/06 |
| | US - A - 2 443 611 (FERGUSON) <br> * complete document * <br> -- | 1,3-5 | |
| D | US - A - 4 078 684 (HASENBERG et al.) <br> * column 3, lines 34 to 50; fig. 2 to 5 * <br> -- | 1,6 | |
| A | US - A - 2 611 496 (MARTIN) <br> ---- | | TECHNICAL FIELDS SEARCHED (Int.Cl.3) <br><br> B 60 P  1/00 <br> B 62 D 53/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search <br> Berlin | Date of completion of the search <br> 23-01-1980 | Examiner <br> LUDWIG |

EPO Form 1503.1  06.78